# NEUE EUROPÄISCHE PATENTSCHRIFT

(11) **EP 0 654 890 B2**
(45) Veröffentlichungstag und Bekanntmachung des Hinweises auf die Entscheidung über den Einspruch: **18.09.2002**
(45) Hinweis auf die Patenterteilung: 29.01.1997
(21) Anmeldenummer: 94116314.9
(22) Anmeldetag: 14.10.1994
(51) Int. Cl.: H02P 1/46

(54) **Vorrichtung zum Antrieb eines Einphasen-Synchronmotors, insbesondere zum Antrieb eines Pumpenantriebes in einem Haushaltsgerät**
Device for driving a single phase synchronous motor, especially for driving a pump in a household appliance
Dispositif pour entraîner un moteur synchrone monophasé en particulier pour entraînement d'un pompe dans un appareil ménager

(30) Priorität: 22.11.1993 EP 93118773; 13.05.1994 DE 9407983 U; 29.09.1994 DE 9415761 U
(43) Veröffentlichungstag der Anmeldung: 24.05.1995
(73) Patentinhaber: BSH Bosch und Siemens Hausgeräte GmbH, 81669 München (DE)
(72) Erfinder: Klein, Hans-Wilhelm, Dipl.-Ing., D-97078 Würzburg (DE); Altenbernd, Gerald, Dr.-Ing., D-30455 Hannover (DE); Wähner, Ludwig, Dipl.-Ing., D-97234 Reichenberg (DE); Bass, Martin, Dipl.-Ing., D-97074 Würzburg (DE)

(56) Entgegenhaltungen:
- EP-A- 0 358 805
- EP-A- 0 358 806
- EP-A- 0 574 823
- DE-A- 3 209 394
- DE-A- 4 033 121
- US-A- 4 251 758
- US-A- 5 006 774
- PATENT ABSTRACTS OF JAPAN vol. 6, no. 144 (E-122) (1022) 3. August 1982 & JP-A-57 068 679 (HITACHI SEISOKUSHO K.K.) 27. April 1982

## Beschreibung

Die Erfindung bezieht sich auf eine Vorrichtung zum Antrieb eines Einphasen-Synchronmotors, insbesondere zum Antrieb eines Pumpenantriebes in einem Haushaltsgerät, gemäß Anspruch 1.

Durch die DE-A1-4 033 121 ist ein Verfahren zum Starten eines elektrischen Einphasen-Synchronmotors in einer Vorzugs-Drehrichtung bekannt, bei dem der Rotor des Motors durch wenigstens einen isolierten, aus einer einzigen Halbwelle der speisenden Wechselspannungsquelle bestehenden Stromimpuls mit vorbestimmter Polarität auf einen spezifischen Schritt vorpositioniert und dann nach einer Zeit, die hinreichend groß ist, um den Rotor mechanisch auf diesem Schritt zu stabilisieren mit Vollwellen-Wechselstrom aus der Wechselspannungsquelle gespeist wird, dessen erste Halbwelle eine zu der Polarität des Stromimpulses zur spezifischen Vorpositionierung des Rotors entgegengesetzte Polarität aufweist. Dieses Verfahren ist nur bei bauartbedingt selbstanlaufenden Einphasen-Synchronmotoren einsetzbar, beinhaltet jedoch im stationären Zustand die Merkmale a) und b) des Anspruchs 1.

Durch die EP 0 574 823 A2 ist ein weiterer derartiger Synchronmotor bekannnt geworden, der in Abhängigkeit von einem Stellungssensor im ersten Stellungsbereich von den positiven Halbwellen und im zweiten Stellungsbereich von den negativen Halbwellen gespeist wird. (Merkmal c) des Patentanspruchs 1).

Das Merkmal e) geht aus der EP 0 574 823 A2 nicht hervor, da dort von der Strommesssung Gebrauch gemacht wird. Die EP 0 574 823 A2 befaßt sich nicht mit einem schnellen Abschalten des Einschaltimpulses für den Wechselspannungsschalter. Bei dem dort dargestellten Synchronmotor erfolgt eine Vorpositionierung mit Hilfe eines Impulsgenerators anstelle der Verwendung eines Stellungssensors.

Durch die EP-B1-0 358 805 bzw. EP-B1-0 358 806 sind permanentmagneterregte Einphasen-Synchronmotoren bekannt, bei denen für einen Selbstanlauf das Anlaufmoment dadurch merklich erhöht werden kann, daß durch spezielle Luftspalt- bzw. Blechschnittgestaltung der Rotor mit seiner Polachse in eine Rast-Nullstellung gebracht werden kann, die gegenüber der Längsachse der Statorerregung bis zur sogenannten Querachslage verdreht ist. Derartige einsträngige, vorzugsweise zweipolige, permanentmagneterregte Synchronmotoren mit gewährleistetem Anlauf eignen sich insbesondere bis zum Einsatz bei einer Abgabeleistung von ca. 40 Watt.

Es ist Aufgabe vorliegender Erfindung, mit geringem fertigungs- bzw. montagetechnischem Aufwand Einphasen-Synchronmotoren auch zum Antrieb von Lasten oberhalb von 40 Watt bei sicherem und schnellem Anlauf einsetzen zu können.

Die Lösung dieser Aufgabe gelingt erfindungsgemäß durch eine Vorrichtung gemäß Anspruch 1; vorteilhafte Ausgestaltungen dieser Vorrichtung sind jeweils Gegenstand der Unteransprüche

Durch die erfindungsgemäße Vorrichtung ist es möglich, in Abhängigkeit von der von dem Einphasen-Synchronmotor anzutreibenden Last und somit der durch die rotierenden Massen des Rotors und durch die eigentliche anzutreibende Last bestimmten mechanischen Zeitkonstante mittels einer "verzögerten" Kommutierung der speisenden Wechselspannung den Einphasen-Synchronmotor sicher und in kürzester Zeit bis zur Synchronisierung der Rotordrehzahl mit der Frequenz der speisenden Wechselspannung hochlaufen zu lassen.

In vorteilhafter Weise wird als Stellungssensor für den Rotor ein Hall-IC mit digitalem Ausgang vorgesehen, der die Stellung des vorzugsweise permanentmagneterregten Rotors erfaßt und aufgrund seines Stellungssignals über eine Verknüpfungsschaltung, der auch das jeweilige Signal des gerade anstehenden Wechselspannungsverlaufs vorgegeben wird, einen vorzugsweise als Wechselspannungsschalter vorgesehenen Triac steuert; in vorteilhafter Weise ist zur Reduzierung der notwendigen Stromentnahme aus einem zur Versorgung notwendigen Netzteil vorgesehen, durch einen Motorstromsensor einen jeweils erstmaligen Stromfluß in der einen oder anderen Richtung durch den Einphasen-Synchronmotor nach Schließen des Wechselspannungsschalters oder den Spannungsabfall über der Schaltstrecke des Wechselspannungsschalter zu erfassen und danach nach einer erstmaligen Stromerfassung oder nach der Erfassung der Durchlaßspannung über der Schaltstrecke des eingeschalteten Triacs die Steuerspannung für den Wechselspannungsschalter abzuschalten, der bis zum Nulldurchgang des fließenden Wechselstromes dann in seiner vorherigen Einschalt-Stellung verbleibt.

Die Erfindung sowie weitere vorteilhafte Ausgestaltungen der Erfindung gemäß Merkmalen der Unteransprüche werden im folgenden anhand schematisch dargestellter Ausführungsbeispiele bzw. Funktionsdiagramme in der Zeichnung näher erläutert; darin zeigen:
- FIG 1: in einem ersten dritten Blockschaltbild die Ansteuerung eines Einphasen-Synchronmotors in Abhängigkeit von einem Spannungssensor und von einem Netzspannungssignalformer;
- FIG 2: in einem Blockschaltbild die Ansteuerung eines Einphasen-Synchronmotors in Abhängigkeit von einer über der Schaltstrecke am Wechselspannungsschalter abgeleiteten Referenzspannung für die speisende Wechselspannung,
- FIG 3: die speisende Wechselspannung sowie einzelne Signalabläufe und den Motorstromverlauf bei einer Vorrichtung zum Antrieb eines Einphasen-Synchronmotors gemäß FIG 1 und 2.

In den Blockschaltbildern sind zur deutlicheren Unterscheidung jeweils der Hauptstrompfad des Einphasen-Synchronmotors 1 stark liniert, die Signalflüsse schwach liniert und gepfeilt und die Stromversorgungsleitungen der einzelnen Bauelemente strichliniert dargestellt.

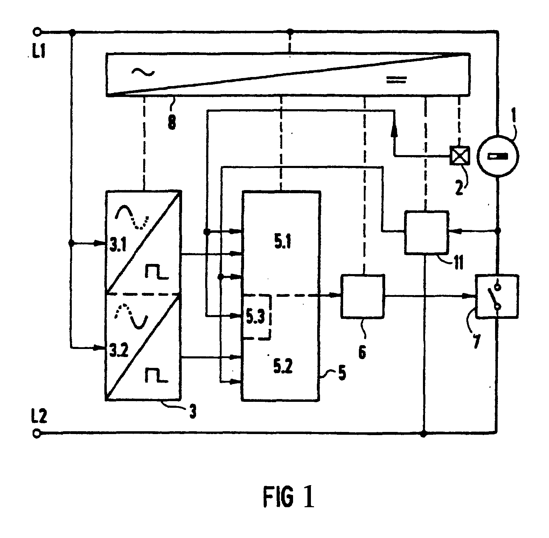

FIG 1 zeigt einen über einen vorzugsweise als Triac ausgebildeten Wechselspannungsschalter 7 an ein speisendes Wechselspannungsnetz L1;L2 anschließbaren Einphasen-Synchronmotor 1 mit hier nur schematisch angedeutetem permanenterregtem zweipoligem (N;S) Rotor. Der Wechselspannungsschalter 7 erhält seinen Einschaltimpuls über eine Treiberanordnung 6 von einer Verknüpfungungsschaltung 5 in Abhängigkeit von eingangsseitig an die Verknüpfungsschaltung 5 gegebenen Signalwerten eines Rotorstellungssensors 2 einerseits bzw. eines Netzspannungssignalformer 3 andererseits. Der Netzspannungssignalformer ist der Verknüpfungsschaltung 5 derart vorgeschaltet, daß jeweils als Referenz-Logiksignale für die speisende Wechselspannung (L1;L2) von einem ersten Teil 3.1 des Netzspannungssignalformer 3 in Impulse, z.B. Rechteckimpulse, umgewandelte positive Halbwellen der speisenden Wechselspannungsquelle an einen ersten Teil 5.1 der Verknüpfungsschaltung 5 und von einem zweiten Teil 3.2 in Rechteckimpulse umgewandelte negative Halbwellen der speisenden Wechselspannungsquelle L1;L2 an einen zweiten Teil 5.2 der Verknüpfungsschaltung 5 weitergegeben werden können.

Der Wechselspannungsschalter steht dabei in vorteilhafter Weise in Einschaltabhängigkeit von der Verknüpfungsschaltung (5) bei jeweils eingangsseitigem H-Signal, hervorgerufen von der positiven Halbwelle der speisenden Wechselspannung, und einem H-Signal des Stellungssensors bzw. bei eingangseitigem H-Signal, hervorgerufen von der negativen Halbwelle der speisenden Wechselspannung, und einem aus einem L-Signal des Stellungssensors durch Invertierung gebildeten H-Signal. Der Rotorstellungssensor 2, der Netzspannungssignalformer 3, ein Spannungssensor 11 als auch die Verknüpfungsschaltung 5 und die Treiberanordnung 6 werden über ein Netzteil 8 aus der Wechselspannungsquelle L1;L2 versorgt.

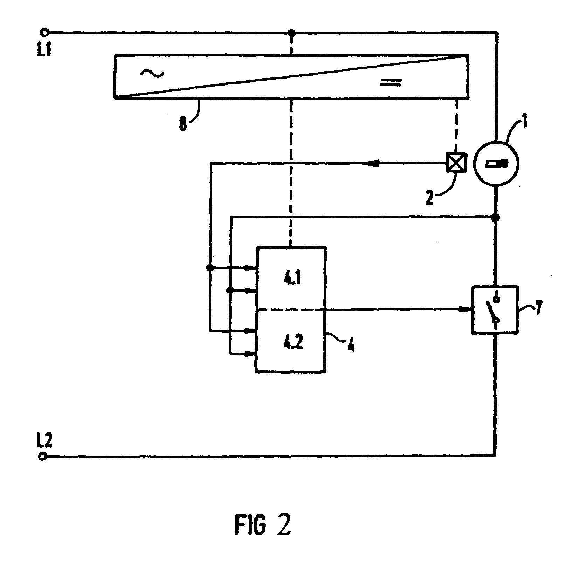

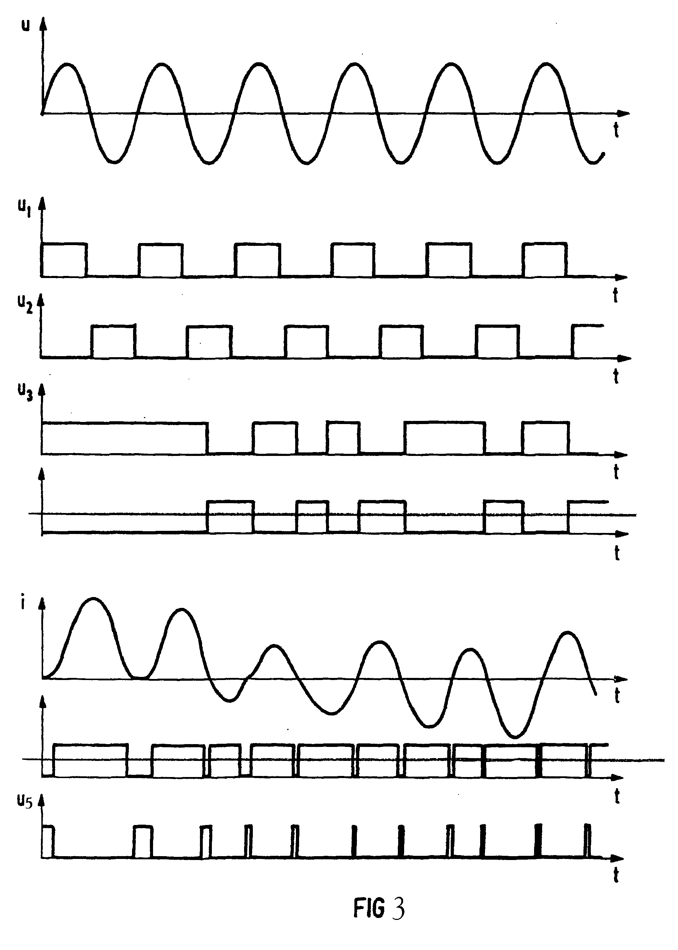

Die grundsätzliche Funktionsweise der erfindungsgemäßen Vorrichtung, insbesondere gemäß den Blockschaltbildern in FIG 1 und 2 und bei einer Abhängigkeit der Abschaltung des Zündimpulses für den Triac von einer Erfassung über der Schaltstrecke des Triacs 7 wird zunächst anhand der Diagramme gemäß FIG 3 näher erläutert; dabei zeigen:
- u=f(t):: Speisende Einphasen-Wechselspannung
- u₁=f(t):: Signal am Ausgang des ersten Teils 3.1 des Netzspannungssignalformers 3
- u₂=f(t):: Signal am Ausgang des zweiten Teils 3.2 des Netzspannungssignalformers 3
- u₃=f(t):: Signal am Ausgang des Rotorstellungssensor 2
- u₄=f(t):: Invertiertes Signal am Ausgang des Rotorstellungssensors 2
- i=f(t):: Motorstrom durch Einphasen-Synchronmotor 1
- u₅=f(t):: Signal am Eingang des Wechselspannungsschalters 7.

Ausgehend von der Annahme, daß der im Stillstand seine eine Nullstellung einnehmende Rotor am Ausgang des Rotorstellungssensors 2 ein H-Signal entsprechend u₃ erzeugt und aufgrund der positiven Halbwelle der Netzspannung u=f(t) am Ausgang des ersten Teils 3.1 des Netzspannungssignalformers 3 ebenfalls ein H-Signal gemäß u₁ anliegt und da noch kein Motorstrom fließt, wird aufgrund der erfüllten UND-Bedingung am ersten Teil 5.1 der Verknüpfungsschaltung 5 ein Einschaltsignal über die Treibervorrichtung 6 an den Triac 7 gegebenen, der dadurch den Einphasen-Synchronmotor 1 an die Wechselspannungsquelle L1;L2 anschließt; der Einphasen-Synchronmotor 1 wird somit durch Speisung mit einer positiven Halbwelle der Wechselspannungsquelle L1;L2 bestromt, so daß sein Rotor zu drehen beginnt und beschleunigt wird.

Der Triac 7 bleibt jedoch solange eingeschaltet wie der durch Netzspannung, Motorinduktivität, die durch den permanenterregten Rotor induzierte Spannung in der Motorwicklung und durch den ohmschen Spannungsabfall bestimmte Motorstrom weiter fließt.

Reicht beim erstmaligen Zuschalten der positiven Halbwelle der Wechselspannungsquelle L1;L2 - wie zuvor geschildert - die erzeugte Rotordrehbewegung nicht aus, um den Rotor in die nächste Rast-Nullstellung zu bringen, so wird der Rotorstellungssensor 2 gemäß Spannungsverlauf u₃ seinen Signalpegel nicht verändern, d.h. weiterhin ein H-Signal abgeben. Da während der nun folgenden negativen Halbwelle der Wechselspannungsquelle L1;L2 vom ersten Schaltungsteil 3.1 des Netzspannungssignalformers 3 ein L-Signal an den ersten Teil 5.1 der Verknüpfungsschaltung 5 gegeben wird, ist dessen UND-Bedingung nicht erfüllt, so daß am Triac 7 kein Einschaltbefehl anliegt und somit die Verbindung der Wechselspannungsquelle L1;L2 mit dem Einphasen-Synchronmotor 1 unterbrochen ist.

Aufgrund der nunmehr nicht erfüllten Und-Bedingung wird vom ersten Teil 5.1 der Verknüpfungsschaltung 5 kein Einschaltbefehl an den Triac 7 gegeben, so daß dieser bei Erreichen des Nullwertes des Stromes geöffnet ist und somit der Einphasen-Synchronmotor 1 während der negativen Halbwelle nicht bestromt ist. Während der anschließenden positiven Halbwelle der Wechselspannungsquelle L1;L2 und dem weiterhin anstehenden H-Signal gemäß u₃ des Rotorstellungssensors 2 wird der Einphasen-Synchronmotor 1 bei nunmehr während der positiven Halbwelle wiederum geschlossenem Triac 7 bestromt und weiter beschleunigt.

Wird nunmehr die zweite Nullstellung des Rotors erreicht, so wird vom Rotorstellungssensor 2 ein L-Signal entsprechend u₄ in FIG 1 abgegeben, das durch einen Invertierungsteil 5.3 im zweiten Teil 5.2 der Verknüpfungsschaltung 5 invertiert wird, derart daß somit ein H-Signal vom Rotorstellungssensor 2 dem zweiten Teil 5.2 der Verknüpfungsschaltung 5 vorgegeben ist. Da vom zweiten Teil 3.2 des Netzspannungssignalformers 3 bei negativer Halbwelle der Wechselspannungsquelle L1;L2 ebenfalls ein H-Signal gemäß u₁=f(t) anliegt und da noch kein Motorstrom fließt, ist die UND-Verknüpfung im zweiten Teil 5.3 der Verknüpfungsschaltung 5 erfüllt, so daß über die Treibervorrichtung 6 wiederum ein Einschaltsignal an den Triac 7 gegeben und nach dessen Einschalten der Einphasen-Synchronmotor 1 nunmehr im Bereich zwischen der zweiten Nullstellung und der ersten Nullstellung durch Speisung mit einer oder mehreren negativen Halbwellen der Wechselspannungsquelle L1;L2 weiterbeschleunigt werden kann. Aufgrund dieser dargestellten Ansteuerung ergibt sich dann ein Motorstromverlauf gemäß i=f(t) gemäß FIG 3.

Die Abschaltung des Zündimpulses für den Triac 7 erfolgt hierbei in Abhängigkeit von einer Erfassung der Durchlaßspannung über der Schaltstrecke des Triacs 7, z.B. mittels eines Spannungssensors 11, der eine positive bzw. negative Spannung an der Schaltstrecke des Triacs 7 nach Art eines Fensterkomparators mit vorgegebenen Referenzspannungen vergleicht und bei Detektierung einer Durchlaßspannung am Triac 7 ein entsprechendes Signal über seinen Ausgang an den ersten Teil 5.1 bzw. zweiten Teil 5.2 der Verknüpfungsschaltung 5 gibt und diese, den Zündimpuls für den Triac 7 verhindert bzw. aufhebt. Gegenüber einer Motorstromdetektierung ergibt sich bei geringerer Meßverlustleistung ein eindeutiger erfaßbares, durch die Netzspannungsamplitude bestimmtes Signal.

Eine vorteilhafte Verwendung der erfindungsgemäßen Vorrichtung liegt in der Berücksichtigung der Phasenverschiebung zwischen Motorstrom einerseits und Motorspannung andererseits bzw. des sogenannten Bestromungswinkels zwischen der Bestromungsstellung des Rotors einerseits und dessen jeweiliger stromlosen Raststellung, z.B. bei einem Stufenpol. Um trotzdem ein maximales Motormoment sicherzustellen, wird der Einschaltimpuls und damit der Zündzeitpunkt des Triacs 7 vorverlegt; dies erfolgt nach einer Ausgestaltung der Erfindung, insbesondere bei vorteilhafter Anordnung des Stellungssensors innerhalb des Luftspalts und im Bereich zwischen zwei benachbarten Rotor-Polen und bei vorteilhafter Erregung des vorzugsweise als Hall-Element 2 ausgebildeten Stellungssensors durch das insbesondere dauermagneterregte Rotormagnetfeld selbst dadurch, daß die Signale aus der speisenden Wechselspannung über eine Verzögerungsschaltung an die Verknüpfungsschaltung 5 und damit an die Steuerung des Triacs 7 abgegeben und anschließend durch jeweiliges Umkehren der Vorzeichen der positiven bzw. negativen Spannungshalbwellen-Signale weitergegeben werden. Dies wird durch Kreuzen der Verbindungsleitungen zwischen den Ausgängen des ersten Teils 3.1 bzw. des zweiten Teils 3.2 des Netzspannungssignalformers 3 und den Eingängen des ersten Teils 5.1 bzw. des zweiten Teils 5.2 der Verknüpfungsschaltung 5 erreicht; insgesamt ergibt sich dadurch die gewünschte Voreilung des Einschaltimpulses.

In vorteilhafter Weise ist unter Mitbenutzung der bisher erläuterten Vorrichtung mit geringem Aufwand auch ein Schutz gegen eine unerwünschte Drehrichtung beim Antrieb insbesondere einer Laugenpumpe, z.B. bei starken Unwuchterschütterungen des Waschautomaten oder bei rückfließender Laugenflüssigkeit möglich. Dazu läßt sich neben dem ersten Stellungssensor 2 ein weiterer, am Umfang des Einphasen-Synchronmotors 1 räumlich versetzter Stellungssensor vorsehen; beide Stellungssignale werden an eine der Verknüpfungsschaltung vorgelagerte Vergleichsschaltung insbesondere in Form eines Flip-Flops, gegeben; bei Erkennen einer falschen Drehrichtung, z.B. aufgrund des Vorzeichens der Signaldifferenz, wird über die Verknüpfungsschaltung 5 die Ansteuerung des Triacs 7 gesperrt.

Eine weitere Vereinfachung unter Einsatz der oben erörterten Verzögerungsschaltung besteht darin, daß unter Verzicht auf einen weiteren Drehstellungssensor das zeitversetzte und mit dem Signal des ersten Stellungssensors 2 zu vergleichende Signal aus dem über die Verzögerungsschaltung verzögerten einen Spannungssignal gewonnen wird, das im vorliegenden Fall an dem zweiten Teil 5.2 der Verknüpfungsschaltung 5 anliegt; das Ausgangssignal des Stellungssensors 2 ist dabei an den Eingang des ersten Teils 5.1 der Verknüpfungsschaltung 5 angeschlossen.

In beiden vorgenannten Fällen wird nach einer weiteren Ausgestaltung in Abhängigkeit von einer Erkennung einer falschen Drehrichtung ein der Vergleichsschaltung nachgeschaltetes Zeitglied eingeschaltet, das die Zündmöglichkeit für den Triac 7 nur für eine festlegbare Zeit sperrt.

In einer weiteren Ausgestaltung der Erfindung erfolgt die einfache Umschaltung der Vorrichtung zum Antrieb des Synchronmotors auf eine verringerte Leistungsaufnahme nach dem Hochlauf in den Synchronismus durch eine entsprechende Phasenanschnittsteuerung. Dazu werden z.B. im einfachsten Fall nach einer bestimmten Startzeit, die durch ein an der Ausgangsseite des Netzteils 8 angeordnetes Startzeitglied festlegbar ist, durch zumindest eine der einen Spannungshalbwelle vorgeschaltete Verzögerungsschaltung oder durch beiden Spannungshalbwellen zwischen dem Startzeitglied und dem Netzspannungssignal former 3, jeweils vor den Teilen 3.1 und 3.2 vorgelagerte vorgeschaltete Verzögerungsschaltungen auf einfache Weise die Zündzeitpunkte des Triacs 7 zu späteren Zündzeitpunkten verschoben.

Falls an den Eingängen der Verknüpfungsschaltung 5 auch das Ausgangssignal eines des Spannungssensors 11 (FIG 1) anliegt, so steht der Wechselsspannungsschalter zusätzlich in Einschaltabhängigkeit von einem L-Pegel dieser Signalspannung.

FIG 2 zeigt eine weitere Vereinfachung der Vorrichtung gemäß FIG 1 dahingehend, daß zur Bildung des Einschaltbefehls für den Wechselspannungsschalter das Referenz-Signal für die jeweils anliegende Wechselspannung direkt auf der Versorgungsspannungsebene über der Schaltstrecke des Wechselspannungsschalters 7 abgegriffen wird und somit auf eine gesonderte Logiksignal-Zwischenebene mit einem vorgeschalteten, unmittelbar an die speisende Wechselspannungsquelle L1;L2 angeschlossenen Netzspannungssignalformer 3 gemäß FIG 1 verzichtet werden kann; das Ansteuersignal für den Wechselspannungsschalter 7 wird direkt aus der über dessen Hauptanschlußklemmen seiner Schaltstrecke abgegriffenen Spannung erzeugt und bei Erfüllung der vorgegebenen Verknüpfung mit dem Signal des Stellungssensors 2 im Sinne der gewünschten Drehmomentbildung als Einschaltimpuls an den Wechselspannungsschalter 7 weitergegeben. Wesentliche Schaltungsteile können bei diesem Ausführungsbeispiel sowohl für die Einschaltung als auch die spannungsabhängige Ausschaltung - wie anhand FIG 1 - gemeinsam genutzt werden, wobei zweckmäßigerweise die Funktion der Bauteile des Spannungssensors 11 und des Treibers 6 gemäß FIG 1 von der Verknüpfungsschaltung 4 gemäß FIG 2 mit übernommen werden; dabei ist ein erster Schaltungsteil 4.1 für die Verarbeitung der positiven Halbwelle der Wechselspannung parallel zu den Anschlüssen des Wechselspannungsschalters 7 und das zweite Schaltungsteil 4.2 für die Verarbeitung der entsprechenden negativen Halbwelle verantwortlich.

Der Wechselspannungsschalter 7 steht dazu in Einschaltabhängigkeit von einer Verknüpfungsschaltung 4 bei jeweils eingangsseitigem H-Signal, hervorgerufen von einer positiven Halbwelle an der Schaltstrecke des Wechselspannungsschalters 7 und einem H-Signal des Stellungssensors 2 bzw. bei eingangsseitigem H-Signal, hervorgerufen von einer negativen Halbwelle an der Schaltstrecke des Wechselspannungsschalters 7 und einem L-Signal des Stellungssensors 2.

Wenn der Wechselspannungsschalter 7 eingeschaltet ist, bricht die Spannung über seiner Schaltstrecke bis auf die sogenannte Durchlaßspannung zusammen, diese reicht nicht mehr aus, um den Einschaltimpuls für den Wechselspannungsschalter 7 aufrechtzuerhalten.

Vom Schutzumfang sind selbstverständlich nicht nur die beispielsweise für eine sogenannte positive Logik beschriebenen Signalverknüpfungen sondern auch deren entsprechende invertierte Zuordnung bei jeweils negativer Logik mitumfaßt.

Der Einphasen-Synchronmotor 1 weist einen Stellungssensor auf, der im Luftspalt im Bereich zwischen zwei benachbarten Polen angeordnet ist.

## Patentansprüche

1. Vorrichtung zum Antrieb eines Einphasen-Synchronmotors, insbesondere zum Antrieb eines Pumpenantriebes in einem Haushaltsgerät, mit den Merkmalen:
a) Der Einphasen-Synchronmotor (1) ist über einen Wechselspannungsschalter (7) an die speisende Wechselspannung (L1;L2) angeschlossen, der durch einen Einschaltimpuls eingeschaltet und anschließend selbsttätig in diesem Schaltzustand solange gehalten ist wie er gleichsinnig von Strom durchflossen ist;
b) der Wechselspannungsschalter (7) ist derart in Einschaltabhängigkeit gestellt,daß der Rotor des Einphasen-Synchronmotors (1) jeweils in einem ersten Stellungsbereich durch Speisung mit Halbwellen der einen Polarität und in einem anschließenden zweiten Stellungsbereich durch Speisung mit Halbwellen der anderen Polarität der speisenden Wechselspannungsquelle (L1;L2) in der einen Drehrichtung beschleunigt ist;
c) der Einphasen-Synchronmotor ist in Abhänigkeit von einem Stellungssensor (2) im ersten Stellungsbereich von den positiven Halbwellen und in dem zweiten Stellungsbereich von den negativen Halbwellen gespeist, der Einschaltimpuls für den Wechselspannungsschalter (7) wird mittels eines Spannungssensors (11) in Abhängigkeit von der Erfassung der Durchlaßspannung über seiner Schaltstrecke abgeschaltet.

2. Vorrichtung zum Antrieb eines Einphasen-Synchronmotors, insbesondere zum Antrieb eines Pumpenantriebes in einem Haushaltsgerät, nach Anspruch 1, mit dem zusätzlichen Merkmal:
k) der Stellungssensor ist im Luftspalt des Einphasen-Synchronmotors im Bereich zwischen zwei benachbarten Polen, angeordnet.

3. Vorrichtung nach einem der vorhergehenden Ansprüche mit dem Merkmal:
g) Der Wechselspannungsschalter (7) steht in Einschaltabhängigkeit von einer Verknüpfungsschaltung (5) bei jeweils eingangsseitigem H-Signal, hervorgerufen von der positiven Halbwelle der speisenden Wechselspannung, und einem H-Signal des Stellungssensors (2) bzw. bei eingangsseitigem H-Signal, hervorgerufen von der negativen Halbwelle der speisenden Wechselspannung, und einem aus einem L-Signal des Stellungssensors (2) durch Invertierung gebildeten H-Signal. (FIG 3)

4. Vorrichtung nach Anspruch 3 mit dem Merkmal:
h) Die eingangsseitigen Logik-Signale für die Verknüpfungsschaltung (5) sind von einem an die speisende Wechselspannung (L1;L2) angeschlossenen Netzspannungssignalformer (3) gebildet.

5. Vorrichtung nach Anspruch 1 mit dem Merkmal:
i) Der Wechselspannungsschalter (7) steht in Einschaltabhängigkeit von einer Verknüpfungsschaltung (4) bei jeweils eingangsseitigem H-Signal, hervorgerufen von einer positiven Halbwelle an der Schaltstrecke des Wechselspannungsschalters (7) und einem H-Signal des Stellungssensors (2) bzw. bei eingangsseitigem H-Signal, hervorgerufen von einer negativen Halbwelle an der Schaltstrecke des Wechselspannunsschalters (7) und einem L-Signal des Stellungssensors (2).

6. Vorrichtung nach einem der vorhergehenden Ansprüche mit dem Merkmal:
j) Als Stellungssensor ist ein Hall-Element (2), insbesondere mit digitalem Ausgang, vorgesehen.

7. Vorrichtung nach einem der vorhergehenden Ansprüche mit dem Merkmal:
l) Der Rotor ist durch einen zumindest zweipoligen Dauermagneten erregt und weist seiner Polzahl entsprechende, die Stellungsbereiche begrenzende Nullstellungen auf.

8. Vorrichtung nach Anspruch 2 und/oder 7 mit dem Merkmal:
m) Der Stellungssensor ist durch das Rotor-Magnetfeld erregt.

9. Vorrichtung nach einem der vorhergehenden Ansprüche, insbesondere nach Anspruches 5 oder 6, mit den Merkmalen:
n) Der Einschaltimpuls ist gegenüber der Wechselspannung der speisenden Wechselspannungsquelle (L1; L2) im Sinne eines maximalen Drehmomentes vorverlegt;
o) zur Vorverlegung des Einschaltimpulses ist eine Verzögerungsschaltung (10) für die Signalvorgabe durch die speisende Wechselspannung und anschließend eine Vorzeichenumkehr der Signale der jeweils positiven bzw. negativen Halbwellen der speisenden Wechselspannungsquelle (L1;L2) vorgesehen.

10. Vorrichtung nach einem der vorhergehenden Ansprüche mit dem Merkmal:
p) Der Einschaltimpuls des Wechselspannungsschalters (7) steht in Ausschaltabhängigkeit von einer Vergleichsschaltung (12.2) zum Vergleich der Aufeinanderfolge zweier zeitlich versetzter Drehsignale des Rotors.

11. Vorrichtung nach Anspruch 10 mit dem Merkmal:
q) Als zeitversetzte Drehsignale sind die Signale zweier in Drehrichtung räumlich gegeneinander versetzter Stellungssensoren (2 bzw. 12.1) vorgesehen.

12. Vorrichtung nach Anspruch 10 mit dem Merkmal:
r) Als zeitversetzte Drehsignale sind die Signale eines der einen Spannungshalbwelle der speisenden Wechselspannung zugeordneten Stellungssensors (2) sowie der Verlauf der anderen, um einen bestimmten Winkel verschobenen, insbesondere verzögerten, Spannungshalbwelle der speisenden Wechselspannung vorgesehen.

13. Vorrichtung nach einem der Ansprüche 10 bis 12 mit dem Merkmal:
s) Der Wechselspannungsschalter (7) steht nach einer Ausschaltung durch die Vergleichsschaltung (12.2) wieder in anschließender Einschaltabhängigkeit von einem der Vergleichsschaltung (12.2) nachgeordneten Zeitglied (12.3).

14. Vorrichtung nach einem der vorhergehenden Ansprüche mit dem Merkmal:
t) Der Wechselspannungsschalter steht in Einschaltabhängigkeit von einem Startzeitglied (T_{S}) und zumindest einer Verzögerungsschaltung (10 bzw. 14), derart daß nach Ablauf des Startzeitgliedes (T_{S}) im Sinne einer Phasenanschnitt-Steuerung zumindest eine Spannungshalbwelle im Vergleich zum Signal des Stellungssensors zeitlich verschoben und der Zündzeitpunkt des Wechselspannungsschalters (7) verzögert ist.

15. Vorrichtung nach einem der vorhergehenden Ansprüche mit dem Merkmal:
u) Der Einphasen-Synchronmotor (1) ist über einen Halbleiterschalter, insbesondere einen Triac (7), an das Wechselspannungsnetz (L1; L2) anschließbar.

## Claims

1. Apparatus for driving a single-phase synchronous motor, in particular for driving a pump drive in a domestic appliance, having the features:
a) the single-phase synchronous motor (1) is connected via an AC switch (7) to a supplying AC voltage (L1; L2) which is switched on by a switch-on pulse and is subsequently automatically held in this switching state as long as current flows through it in the same direction;
b) the AC switch (7) is arranged such that it is switched on in such a manner that the rotor of the single-phase synchronous motor (1) is in each case accelerated in one rotation direction in a first position range by being supplied with half-cycles of one polarity of the supplying AC voltage source (L1; L2), and in a subsequent, second position range by being supplied with half-cycles of the other polarity of the supplying AC voltage source (L1; L2);
c) the single-phase synchronous motor is supplied with the positive half-cycles in the first position range, and with the negative half-cycles in the second position range, as a function of a position sensor (2); and
the switch-on pulse for the AC switch (7) is switched off by means of a voltage sensor (11) in dependence on detection of the on-state voltage across its switching path.

2. Apparatus for driving a single-phase synchronous motor, in particular for driving a pump drive in a domestic appliance, according to claim 1, having the additional feature:
k) the position sensor is arranged in the region between two adjacent poles in the air gap of the single-phase synchronous motor.

3. Apparatus according to one of the preceding claims, having the feature:
g) the AC switch (7) is arranged such that it is switched on by a logic circuit (5) whenever there is an H signal on the input side, caused by the positive half-cycle of the supplying AC voltage, and in the event of an H signal from the position sensor (2) and in the event of an H signal on the input side caused by the negative half-cycle of the supplying AC voltage, and in the event of an H signal formed from an L signal from the position sensor (2) by inversion. (FIG. 3)

4. Apparatus according to claim 3, having the feature:
h) the logic signals on the input side for the logic circuit (5) are formed by a mains power supply voltage signal former (3) which is connected to the supplying AC voltage (L1; L2).

5. Apparatus according to claim 1, having the feature:
i) the AC switch (7) is arranged such that it is switched on by a logic circuit (5) whenever there is an H signal on the input side, caused by a positive half-cycle on the switching path of the AC switch (7) and whenever there is an H signal from the position sensor (2) and/or in the event of an H signal on the input side, caused by a negative half-cycle on the switching path of the AC switch (7), and an L signal from the position sensor (2).

6. Apparatus according to one of the preceding claims, having the feature:
j) a Hall element (2), in particular with a digital output, is provided as the position sensor.

7. Apparatus according to one of the preceding claims, having the feature:
l) the rotor is excited by a permanent magnet having at least two poles and has null positions which correspond to the number of its poles and bound the position ranges.

8. Apparatus according to claim 2 and/or 7, having the feature:
m) the position sensor is excited by the rotor magnetic field.

9. Apparatus according to one of the preceding claims, in particular according to claim 5 or 6, having the features:
n) the switch-on pulse is advanced with respect to the AC voltage from the supplying AC voltage source (L1; L2), for the purpose of maximum torque;
o) in order to advance the switch-on pulse, a delay circuit (10) is provided for the signal preset by the supplying AC voltage and a reversal of the mathematical sign of the signals of the respectively positive and negative half-cycles of the supplying AC voltage source (L1; L2) is subsequently provided.

10. Apparatus according to one of the preceding claims, having the feature:
p) the switch-on pulse of the AC switch (7) is arranged such that it is switched off by a comparison circuit (12.2) for comparing the sequence of two rotor rotation signals which are offset in time.

11. Apparatus according to Claim 10, having the feature:
q) the signals from two position sensors (2 and 12.1, respectively), which are physically offset with respect to one another in the rotation direction, are provided as the rotation signals which are offset in time.

12. Apparatus according to claim 10, having the feature:
r) the signals from a position sensor (2), which is assigned to one voltage half-cycle of the supplying AC voltage, and the profile of the other voltage half-cycle of the supplying AC voltage, which is shifted, in particular delayed, through a specific angle, are provided as the rotation signals which are offset in time.

13. Apparatus according to one of claims 10 to 12, having the feature:
s) after being switched off by the comparison circuit (12.2), the AC switch (7) is once again arranged such that it is subsequently switched on by a timer (12.3) which is arranged downstream of the comparison circuit (12.2).

14. Apparatus according to one of the preceding claims, having the feature:
t) the AC switch is arranged such that it is switched on by a starting timer (Tₛ) and by at least one delay circuit (10 or 14, respectively), in such a manner that at least one voltage half-cycle is shifted in time with respect to the signal from the position sensor after the starting timer (Tₛ) has timed out, for the purpose of phase gating control, and the turn-on time of the AC switch (7) is delayed.

15. Apparatus according to one of the preceding claims, having the feature:
u) the single-phase synchronous motor (1) can be connected to the AC mains power supply (L1; L2) via a semiconductor switch, in particular a triac (7).

## Revendications

1. Dispositif pour entraîner un moteur synchrone monophasé en particulier pour entraînement d'une pompe dans un appareil électroménager, présentant les caractéristiques suivantes:
a) le moteur synchrone monophasé (1) est raccordé à la tension alternative d'alimentation (L1; L2) par l'intermédiaire d'un commutateur de tension alternative (7), qui est activé par une impulsion d'activation puis qui est maintenu de manière autonome dans cet état d'activation jusqu'à ce qu'il soit traversé dans un même sens par le courant ;
b) le commutateur de tension alternative (7) est placé dans une position de dépendance d'activation de manière à ce que le rotor du moteur synchrone monophasé (1) soit respectivement accéléré dans l'un des sens de rotation dans une première plage de position par une alimentation par des demi ondes de l'une des polarités et dans une seconde plage de position suivante par une alimentation par des demi ondes de l'autre polarité de la source de tension alternative d'alimentation (L1 ; L2).
c) en fonction d'un capteur de position (2), le moteur synchrone monophasé est alimenté par les demi ondes positives dans la première plage de position et par les demi ondes négatives dans la seconde plage de position,
e) l'impulsion d'activation pour le commutateur de tension alternative (7) est désactivée à l'aide d'un capteur de tension (11), en fonction de l'enregistrement de la tension continue sur sa longueur de coupure.

2. Dispositif pour entraîner un moteur synchrone monophasé en particulier pour entraînement d'une pompe dans un appareil électroménager selon la revendication 1, présentant la caractéristique supplémentaire suivante:
k) le capteur de position est disposé dans l'interstice du moteur synchrone monophasé, dans la zone située entre deux pôles adjacents.

3. Dispositif selon l'une quelconque des revendications précédentes, présentant la caractéristique suivante:
g) l'activation du commutateur de tension alternative (7) dépend d'un circuit logique (5) pour un signal H respectif du côté entrée, généré par la demi onde positive de la tension alternative d'alimentation et pour un signal H du capteur de position (2) resp. pour un signal H du côté entrée, généré par la demi onde négative de la tension alternative d'alimentation et d'un signal H crée par inversion à partir d'un signal L du capteur de position (2).

4. Dispositif selon la revendication 3, présentant la caractéristique suivante:
h) les signaux logiques du côté entrée pour le circuit logique (5) sont créés par un générateur de signaux (3) raccordé sur la tension alternative d'alimentation (L1 ; L2).

5. Dispositif selon la revendication 1, présentant la caractéristique suivante:
i) l'activation du commutateur de tension alternative (7) dépend d'un circuit logique (4), pour un signal H respectif du côté entrée, généré par une demi onde positive sur la longueur de coupure du commutateur de tension alternative (7), et d'un signal H du capteur de position (2) resp. d'un signal H du côté entrée, généré par une demi onde négative sur la longueur de coupure du commutateur de tension alternative (7) et d'un signal L du capteur de position (2).

6. Dispositif selon l'une quelconque des revendications précédentes, présentant la caractéristique suivante :
j) le capteur de position prévu est un élément à effet de Hall (2), particulièrement muni d'une sortie numérique.

7. Dispositif selon l'une quelconque des revendications précédentes, présentant la caractéristique suivante:
l) le rotor est excité par un électro-aimant permanent au moins bipolaire et présente des positions zéro correspondant à son nombre de pôles et limitant les plages de positions.

8. Dispositif selon la revendication 2 et/ou 7, présentant la caractéristique suivante:
m) le capteur de position est excité par le champ magnétique du rotor.

9. Dispositif selon l'une quelconque des revendications précédentes, en particulier selon la revendication 5 ou 6, présentant les caractéristiques suivantes:
n) l'impulsion d'activation est pré-déplacée par rapport à la tension alternative de la source de tension alternative d'alimentation (L1 ; L2), dans le sens d'un couple de rotation maximal;
o) pour le pré-déplacement de l'impulsion d'activation, on prévoit un circuit de temporisation (10) pour la prescription du signal par la tension alternative d'alimentation, puis un retournement de signe des signaux des demi ondes respectives positives ou négatives de la source de tension alternative d'alimentation (L1 ; L2).

10. Dispositif selon l'une quelconque des revendications précédentes, présentant la caractéristique suivante:
p) la désactivation de l'impulsion d'allumage du commutateur de tension alternative (7) dépend d'un circuit de comparaison (12.2) destiné à comparer la suite chronologique de deux signaux de rotation du rotor qui sont décalés dans le temps.

11. Dispositif selon la revendication 10, présentant la caractéristique suivante:
q) les signaux de deux capteurs de positions (2 resp. 12.1) physiquement déportés l'un par rapport à l'autre dans le sens de rotation sont prévus en tant que signaux de rotation décalés dans le temps.

12. Dispositif selon la revendication 10, présentant la caractéristique suivante:
r) les signaux d'un capteur de position (2) affecté à la demi onde de tension de la tension alternative d'alimentation, ainsi que la courbe de l'autre demi onde de tension de la tension alternative d'alimentation qui est décalée d'un certain angle, en particulier temporisée, sont prévus en tant que signaux de rotation décalés dans le temps.

13. Dispositif selon l'une quelconque des revendications 10 à 12, présentant la caractéristique suivante:
s) après un cycle de désactivation par le circuit de comparaison (12.2), l'activation du commutateur de tension alternative (7) est à nouveau dépendante d'un relais temporisateur (12.3) situé en aval du circuit de comparaison (12.2).

14. Dispositif selon l'une quelconque des revendications précédentes, présentant la caractéristique suivante :
t) l'activation du commutateur de tension alternative dépend d'un relais temporisateur de démarrage (T_{S}) et d'au moins un circuit de temporisation (10 resp. 14), de manière à ce qu'après l'écoulement du relais temporisateur de démarrage (T_{S}), dans le sens d'une commande de coupe de phase, au moins une demi onde de tension soit décalée dans le temps, en comparaison du signal du capteur de position et de manière à ce que l'instant d'allumage du commutateur de tension alternative (7) soit temporisé.

15. Dispositif selon l'une quelconque des revendications précédentes, présentant la caractéristique suivante :
u) le moteur synchrone monophasé (1) peut être raccordé au réseau de tension alternative (L1, L2), par l'intermédiaire d'un commutateur semiconducteur, en particulier par l'intermédiaire d'un triac (7).
